# FASCICULE DE BREVET EUROPEEN

(11) **EP 2 581 197 B1**
(45) Date de publication et mention de la délivrance du brevet: **20.05.2020**
(21) Numéro de dépôt: 12188221.1
(22) Date de dépôt: 11.10.2012
(51) Int. Cl.: B29C 45/26, B29C 45/00, F16L 47/06, B29L 31/24

(54) **Procédé de fabrication d'un raccord en matière plastique et raccord ainsi obtenu**
Verfahren zur Herstellung eines Plastikverbindungsteils, und so erhaltenes Verbindungsteil
Method for manufacturing a plastic connector and connector obtained thereby

(30) Priorité: 11.10.2011 FR 1159191
(43) Date de publication de la demande: 17.04.2013
(73) Titulaire: Parker Hannifin Manufacturing France SAS, 74112 Annemasse (FR)
(72) Inventeur: Forgit, Cédric, 35370 BREAL SOUS VITRE (FR)
(74) Mandataire: Lavialle, Bruno François Stéphane

(56) Documents cités:
- DE-A1- 2 027 251
- DE-A1-102005 052 825
- FR-A1- 2 287 638
- NL-C2- 1 032 894

## Description

La présente invention concerne un procédé de fabrication d'un raccord en matière plastique et un raccord ainsi obtenu. Un tel raccord est par exemple destiné à être utilisé dans un circuit de transport de fluide pour relier l'un à l'autre deux éléments du circuit comme des canalisations. Le raccord de l'invention est plus particulièrement adapté à être implanté dans les circuits de protection des fibres optiques utilisées dans les réseaux de télécommunication. Le document NL1032894C2 divulgue un procédé de fabrication d'un élément tubulaire par injection d'un matériau plastique, comportant une surépaisseur locale disposée annulairement.

Les circuits de protection des fibres optiques comprennent des raccords reliant deux à deux des qaines de protection des fibres optiques. Les fibres optiques sont mises en place dans le circuit par la production, dans ledit circuit, d'un flux d'air assurant le déplacement des fibres optiques le long du circuit. Une fois les fibres optiques en place, les tronçons du circuit s'étendant entre les raccords sont isolés les uns des autres.

Les raccords utilisés à cette fin sont réalisés en matériau thermoplastique et comportent un corps tubulaire réalisé par injection du matériau thermoplastique en fusion dans un moule pourvu d'une empreinte à la forme du corps du raccord. Ce mode de fabrication est particulièrement économique.

Ces raccords sont destinés à être montés dans des buses souterraines, être enterrés sous des gravillons ou recouverts de boue... En outre, ces raccords sont susceptibles de subir des efforts d'écrasement ou des chocs par exemple lors d'interventions de maintenance du circuit ou d'opérations de terrassement ou d'enfouissement au voisinage dudit circuit. Des normes, telles que la norme EN 61386-24, ont d'ailleurs été éditées pour fixer des exigences de résistance aux chocs des tubes et accessoires, dont les raccords, destinés à cette application. Il s'avère que de nombreux raccords couramment utilisés n'ont pas une résistance mécanique suffisante pour supporter ces contraintes sans risque de dommage.

Il est connu d'augmenter la résistance mécanique de ces raccords en augmentant le dimensionnement des raccords ou en utilisant un matériau thermoplastique plus résistant, par exemple chargé de fibres de renfort.

Il est ainsi connu du document DE 10 2005 052 825 de renforcer le matériau thermoplastique par l'ajout de fibres de verres. L'injection du matériau thermoplastique à l'une des extrémités de l'empreinte est contrôlée dans le but unique d'aligner lesdites fibres de verre selon une direction donnée dans l'empreinte.

Il en résulte une augmentation du coût de fabrication qui n'est pas compensé par un gain conséquent de résistance.

L'invention procède d'une approche différente pour améliorer la résistance mécanique du raccord.

Le moule utilisé pour la fabrication des raccords comporte habituellement deux demi-coquilles, pourvues chacune d'une empreinte à la forme de la surface extérieure d'une moitié du corps, et au moins une broche qui a une surface extérieure ayant la forme de la surface intérieure du raccord et qui est destinée à s'étendre entre les deux demi-coquilles refermées l'une sur l'autre.

Le point d'injection se situe au voisinage d'une portion de la jonction des demi-coquilles. Lors de l'injection, le matériau thermoplastique tend à se répandre le long d'une ligne de diffusion initiale s'étendant depuis le point d'injection parallèlement à l'axe de la broche avant de s'étendre circonférentiellement en deux flux progressant de part et d'autre de ladite ligne de diffusion en s'éloignant de celle-ci. En remplissant progressivement l'empreinte, les deux flux de matériau thermoplastique se rejoignent le long d'une ligne de recollement symétriquement opposée à la ligne de diffusion initiale.

Des expérimentations ont montré qu'une ligne de faiblesse du raccord coïncide avec la ligne de recollement du matériau thermoplastique.

Selon l'invention, on prévoit un procédé de fabrication d'un raccord tubulaire par injection d'un matériau plastique en fusion dans une empreinte d'un moule, l'injection étant réalisée en une zone de l'empreinte agencée pour favoriser un écoulement circonférentiel du matériau thermoplastique avant un écoulement axial du matériau thermoplastique de telle manière que le matériau thermoplastique progresse le long de l'empreinte avec un front sensiblement annulaire, l'empreinte étant conformée de sorte que le raccord obtenu comprenne un corps tubulaire comportant une surépaisseur locale s'étendant annulairement au voisinage d'une partie médiane du corps tubulaire, la zone d'injection étant disposée au voisinage d'une partie médiane de l'empreinte qui correspond à la surépaisseur de la partie médiane du corps tubulaire, dans lequel l'empreinte est agencée de telle manière que la surépaisseur soit un bourrelet disposé au voisinage de la partie médiane du corps tubulaire et disposé entre deux gorges, l'empreinte étant conformée de sorte que le corps du raccord obtenu comprenne des parties qui sont adjacentes auxdites gorges et ont des diamètres externes supérieurs à un diamètre externe du bourrelet et ont une surface externe annelée, et les gorges se trouvent entre lesdites parties adjacentes.

En favorisant un écoulement circonférentiel du matériau thermoplastique avant un écoulement axial du matériau thermoplastique, le recollement est réalisé très rapidement et le matériau thermoplastique progresse le long de l'empreinte avec un front sensiblement annulaire de sorte qu'il n'y a qu'une portion de recollement extrêmement réduite.

Le point d'injection du matériau thermoplastique se situe dans la zone de l'empreinte correspondant à la surépaisseur annulaire.

Ainsi, au tout début de l'injection le matériau thermoplastique en fusion tend à se répandre en priorité dans la zone de l'empreinte où il rencontre la moindre résistance à savoir dans la zone de l'empreinte correspondant à la surépaisseur annulaire puisque la présence de cette surépaisseur engendre des variations de l'épaisseur du corps qui freinent la propagation axiale du matériau thermoplastique en fusion. La forme de l'empreinte et le positionnement du point d'injection du matériau thermoplastique facilitent donc la formation rapide d'au moins une grande partie d'un anneau de matériau thermoplastique en fusion avant que le matériau thermoplastique en fusion se répande axialement. La zone de recollement est donc très réduite.

L'invention a également pour objet un raccord obtenu par le procédé ci-dessus.

D'autres caractéristiques et avantages de l'invention ressortiront à la lecture de la description qui suit d'un mode de réalisation particulier non limitatif de l'invention.

Il sera fait référence aux dessins annexés, parmi lesquels :
- la figure 1 est une vue en coupe d'un raccord conforme à l'invention ;
- la figure 2 est une vue agrandie de ce raccord ;
- les figures 3 à 5 sont des vues successives en coupe axiale de l'empreinte au début de l'injection montrant la propagation du matériau thermoplastique vue depuis l'opposé du point d'injection.

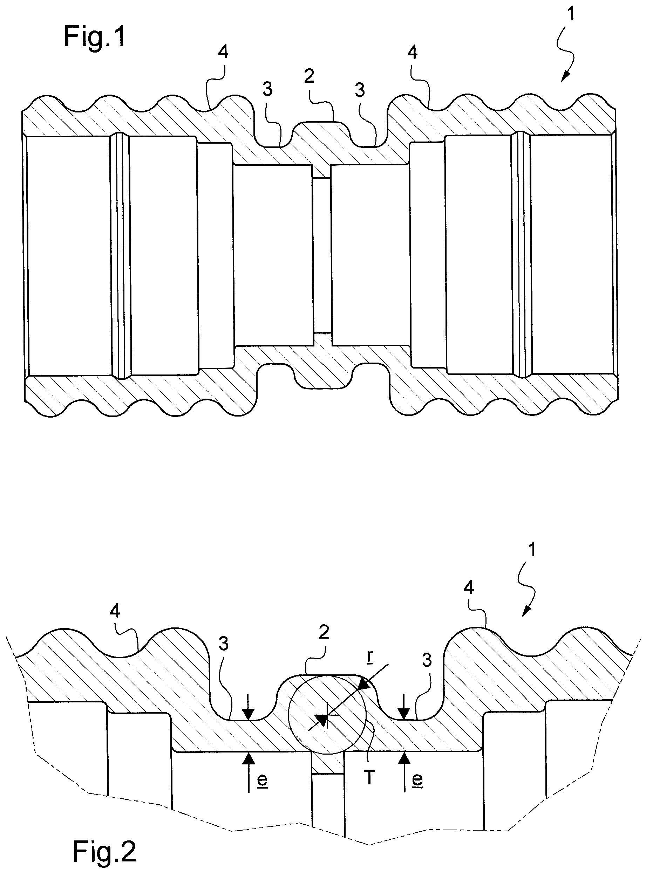

En référence aux figures 1 et 2, le raccord conforme à l'invention comprend un corps tubulaire 1 comportant une surépaisseur locale s'étendant annulairement. La surépaisseur est un bourrelet 2 disposé au voisinage d'une partie médiane du corps tubulaire et disposé entre deux gorges 3.

Le bourrelet 2 est dimensionné de telle manière qu'un tore T puisse s'inscrire dans le bourrelet 2. Le tore T a un petit rayon r supérieur à une épaisseur e du corps 1 au niveau des gorges 3.

Le corps 1 comprend des parties 4 qui sont adjacentes auxdites gorges 3 et ont des diamètres externes supérieurs à un diamètre externe du bourrelet 2. Ainsi, la surface extérieure du bourrelet 2 s'étend en retrait des parties 4 limitant le risque que des chocs soient portés directement sur le bourrelet 2.

Lesdites parties adjacentes 4 ont une surface externe 5 annelée.

Le raccord tubulaire est fabriqué au moyen d'un procédé conforme à l'invention.

Le procédé de fabrication met en œuvre une injection d'un matériau thermoplastique en fusion dans une empreinte, généralement désignée en E, d'un moule M.

Le moule M utilisé pour la fabrication des raccords est de type classique et comporte deux demi-coquilles, pourvues chacune d'une empreinte à la forme de la surface extérieure d'une moitié du corps 1, et deux broches qui ont une surface extérieure ayant la forme de la surface intérieure du corps 1 et qui sont destinée à être coaxialement aboutées entre les deux demi-coquilles refermées l'une sur l'autre.

Le point d'injection se situe au voisinage d'une portion de la jonction des demi-coquilles en une zone de l'empreinte E conformée pour provoquer un écoulement circonférentiel du matériau thermoplastique avant un écoulement axial du matériau thermoplastique de telle manière que le matériau thermoplastique progresse le long de l'empreinte avec un front annulaire.

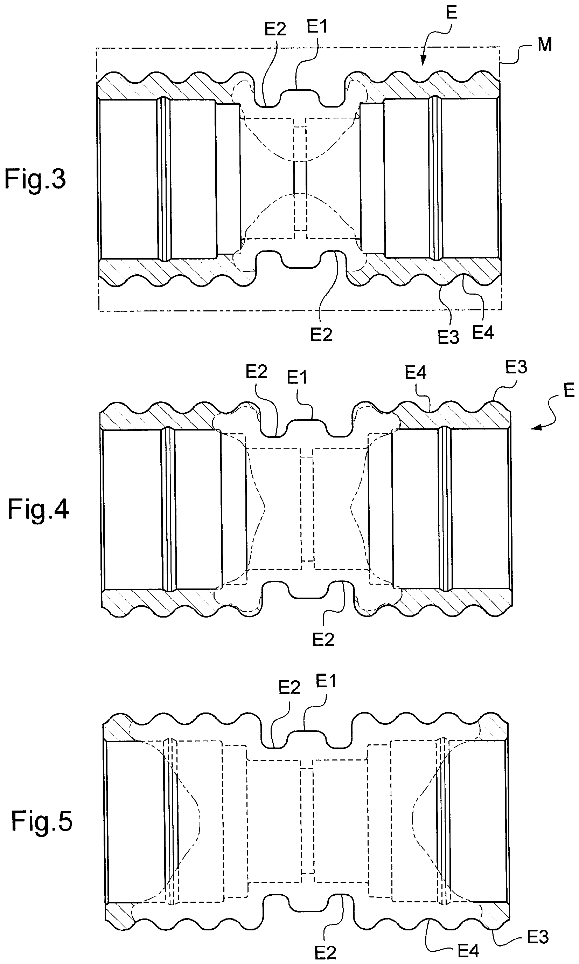

Ainsi, au tout début de l'injection (figures 3 à 5), le matériau thermoplastique en fusion tend à se répandre en priorité dans la zone de l'empreinte E où il rencontre la moindre résistance, à savoir d'abord dans la zone E1 de l'empreinte E correspondant au bourrelet 2, les zones E2 de l'empreinte E correspondant au fond des gorges 3 ayant une épaisseur plus faible constituent des zones d'étranglement (ou de restriction de passage) entraînant une augmentation des frottements contrariant la progression du matériau thermoplastique dans une direction axiale. Le matériau thermoplastique en fusion se sépare ainsi, depuis le point d'injection, en deux flux qui progressent d'abord circonférentiellement et tendent à remplir en grande partie d'abord la zone E1 de l'empreinte E correspondant au bourrelet 2 (figures 3). La pression d'injection étant maintenue, le matériau thermoplastique en fusion est ensuite contraint de progresser dans le sens axial et de pénétrer dans les zones E2 de l'empreinte E correspondant au fond des gorges 3 puis dans celles correspondant aux parties 4 qui sont adjacentes auxdites gorges 3 (figure 4). La présence des gorges 3 et le fait que la surface extérieure des parties 4 soit annelée engendrent des variations périodiques de l'épaisseur du corps 1 qui freinent la propagation axiale du matériau thermoplastique en fusion et favorisent la propagation circonférentielle du matériau thermoplastique en -fusion. Ainsi, le matériau thermoplastique en fusion tend à remplir les zones E3 de plus forte épaisseur avant de pénétrer les zones adjacentes E4 de moindre épaisseur. Les zones E4 ont une épaisseur plus faible et constituent des zones d'étranglement (ou de restriction de passage) entraînant une augmentation des frottements s'opposant à la progression du matériau thermoplastique dans une direction axiale. Le recollement des flux du matériau thermoplastique en fusion est donc réalisé plus rapidement favorisant la propagation axiale d'un front annulaire de matériau thermoplastique en fusion (figure 5) .

On notera que le dimensionnement du bourrelet 2 et donc de la zone E1 de l'empreinte E permet d'accélérer le remplissage de la zone E1 autorisant un recollement rapide des deux flux de matériau thermoplastique en fusion. Le recollement ainsi obtenu présente en outre une étendue limitée.

Bien entendu, l'invention n'est pas limitée au mode de réalisation décrit mais englobe toute variante entrant dans le champ de l'invention telle que définie par les revendications.

L'empreinte, et donc le raccord, peuvent avoir des formes différentes de celles illustrées.

L'invention est applicable aux raccords rectilignes, coudés, en T, en Y...

## Revendications

1. Procédé de fabrication d'un raccord tubulaire par injection d'un matériau plastique en fusion dans une empreinte (E) d'un moule, l'injection étant réalisée en une zone de l'empreinte agencée pour favoriser un écoulement circonférentiel du matériau thermoplastique avant un écoulement axial du matériau thermoplastique de telle manière que le matériau thermoplastique progresse le long de l'empreinte avec un front sensiblement annulaire, l'empreinte étant conformée de sorte que le raccord obtenu comprenne un corps tubulaire (1) comportant une surépaisseur locale s'étendant annulairement au voisinage d'une partie médiane du corps tubulaire, la zone d'injection étant disposée au voisinage d'une partie médiane de l'empreinte qui correspond à la surépaisseur de la partie médiane du corps tubulaire, dans lequel l'empreinte est agencée de telle manière que la surépaisseur soit un bourrelet (2) disposé au voisinage de la partie médiane du corps tubulaire et disposé entre deux gorges (3), l'empreinte étant conformée de sorte que le corps du raccord obtenu comprenne des parties (4) qui sont adjacentes auxdites gorges et ont des diamètres externes supérieurs à un diamètre externe du bourrelet et ont une surface externe annelée, et les gorges se trouvent entre lesdites parties adjacentes.

2. Raccord obtenu par le procédé conforme au procédé selon la revendication 1, comprenant un corps tubulaire (1) comportant une surépaisseur locale s'étendant annulairement au voisinage d'une partie médiane du corps tubulaire, dans lequel la surépaisseur est un bourrelet (2) disposé au voisinage de la partie médiane du corps tubulaire et disposé entre deux gorges (3), le corps du raccord comprenant des parties (4) qui sont adjacentes auxdites gorges et ont des diamètres externes supérieurs à un diamètre externe du bourrelet, lesdites parties adjacentes ont une surface externe annelée et les gorges se trouvent entre lesdites parties adjacentes.

3. Raccord selon la revendication 2, dans lequel dans le bourrelet (2) peut s'inscrire dans un tore ayant un petit rayon supérieur à une épaisseur du corps au niveau des gorges.

## Patentansprüche

1. Verfahren zur Herstellung eines rohrförmigen Verbindungsteils durch Einspritzen eines geschmolzenen Kunststoffmaterials in einen Formhohlraum (E) einer Form, wobei das Einspritzen in einem Bereich des Formhohlraums erfolgt, der so ausgebildet ist, dass er ein umfängliches Fließen des thermoplastischen Materials vor einem axialen Fließen des thermoplastischen Materials begünstigt, derart, dass das thermoplastische Material entlang des Formhohlraums mit einer im Wesentlichen ringförmigen Vorderseite fortschreitet, wobei der Formhohlraum so geformt ist, dass das erhaltene Verbindungsteil einen rohrförmigen Körper (1) umfasst, der eine lokale Überdicke enthält, die sich ringförmig in der Nähe eines mittleren Teils des rohrförmigen Körpers erstreckt, wobei der Einspritzbereich in der Nähe eines mittleren Teils des Formhohlraums angeordnet ist, der der Überdicke des mittleren Teils des rohrförmigen Körpers entspricht, bei dem der Formhohlraum derart angeordnet ist, dass die Überdicke ein Wulst (2) ist, der in der Nähe des mittleren Teils des rohrförmigen Körpers angeordnet ist und der zwischen zwei Nuten (3) angeordnet ist, wobei der Formhohlraum so geformt ist, dass der Körper des erhaltenen Verbindungsteils Teile (4) umfasst, die an die genannten Nuten angrenzen und Außendurchmesser haben, die größer als ein Außendurchmesser des Wulstes sind, und die eine geriffelte Außenfläche haben, und sich die Nuten zwischen den genannten angrenzenden Teilen befinden.

2. Verbindungsteil, das durch das Verfahren gemäß dem Verfahren nach Anspruch 1 erhalten wird, umfassend einen rohrförmigen Körper (1), der eine lokale Überdicke enthält, die sich ringförmig in der Nähe eines mittleren Teils des rohrförmigen Körpers erstreckt, bei dem die Überdicke ein Wulst (2) ist, der in der Nähe des mittleren Teils des rohrförmigen Körpers angeordnet ist und der zwischen zwei Nuten (3) angeordnet ist, wobei der Körper des Verbindungsteils Teile (4) umfasst, die an die genannten Nuten angrenzen und Außendurchmesser haben, die größer als ein Außendurchmesser des Wulstes sind, wobei die angrenzenden Teile eine geriffelte Außenfläche haben und die Nuten sich zwischen den genannten angrenzenden Teilen befinden.

3. Verbindungsteil nach Anspruch 2, bei dem sich der Wulst (2) in einen Torus einschreiben kann, der einen kleinen Radius hat, der größer als eine Dicke des Körpers im Bereich der Nuten ist.

## Claims

1. Method for manufacturing a tubular connector by injecting a molten plastics material into a cavity (E) of a mould, the injection being made in a zone of the cavity arranged in order to promote a circumferential flow of the thermoplastic material prior to an axial flow of the thermoplastic material, such that the thermoplastic material progresses along the cavity with a substantially annular front, the cavity being shaped such that the connector obtained comprises a tubular body (1) having a local thickened portion that extends in an annular manner in the vicinity of a central portion of the tubular body, the injection zone being provided in the vicinity of a central portion of the cavity that corresponds to the thickened portion of the central portion of the tubular body, wherein the cavity is arranged such that the thickened portion is a bulge (2) provided in the vicinity of the central portion of the tubular body and provided between two grooves (3), the cavity being shaped such that the body of the connector obtained comprises portions (4) that are adjacent to said grooves, have outer diameters that are greater than an outer diameter of the bulge and have a corrugated outer surface, and the grooves are located between said adjacent portions.

2. Connector obtained by the method in accordance with the method according to claim 1, comprising a tubular body (1) having a local thickened portion that extends in an annular manner in the vicinity of a central portion of the tubular body, wherein the thickened portion is a bulge (2) provided in the vicinity of the central portion of the tubular body and provided between two grooves (3), the body of the connector comprising portions (4) that are adjacent to said grooves and have outer diameters that are greater than an outer diameter of the bulge, said adjacent portions have a corrugated outer surface and the grooves are located between said adjacent portions.

3. Connector according to claim 2, wherein in the bulge (2) may lie in a torus having a short radius that is greater than a thickness of the body in the region of the grooves.
